# FASCICULE DE BREVET EUROPEEN

(11) **EP 0 969 072 B1**
(45) Date de publication et mention de la délivrance du brevet: **26.11.2003**
(21) Numéro de dépôt: 99112346.4
(22) Date de dépôt: 28.06.1999
(51) Int. Cl.: C09K 21/02, E04B 1/94, B05B 7/14, B28C 5/40, C04B 28/02

(54) **Technique pour l'isolation et la protection contre le feu de structures métalliques**
Technik für die Isolierung und den Feuerschutz von Metallstrukturen
Technique for insulation and fireproofing of metall structures

(30) Priorité: 02.07.1998 IT GE980059
(43) Date de publication de la demande: 05.01.2000
(73) Titulaire: IMPRESA MARINONI srl, 16152 Genova (IT)
(72) Inventeur: Ronco, Romeo, 16124 Genova (IT)
(74) Mandataire: Maritano Maello, Giovanna

(56) Documents cités:
- FR-A- 2 280 489
- FR-A- 2 333 622
- FR-A- 2 436 765
- US-A- 4 263 346
- US-A- 5 401 538
- US-A- 5 685 903

## Description

La présente invention concerne une technique innovante pour l'isolation et la protection contre le feu de structures métalliques.

Selon la technique connue, par exemple dans le secteur naval, les structures métalliques doivent être convenablement isolées pour obéir aux normes. Il existe trois types d'isolation requise: celui qui permet aux ponts et cloisons de résister contre le feu pendant une durée prescrite, par exemple pendant 60', appelés ponts et cloisons A60, ou pendant 30', appelés ponts et cloisons A30; l'isolation thermique, apte à préserver les structures contre les sautes de température; l'isolation acoustique qui a pour but d'amortir la transmission des bruits et/ou des vibrations dans les zones environnantes.

La finition en surface desdites isolations diffère en fonction de leur emploi; elle peut elle aussi être subdivisée en trois catégories: raffinée si la surface traitée doit rester à la vue, brute dans le cas contraire, imperméable si elle doit être soumise à de fréquents lavages.

Selon la technique connue, l'isolation des structures métalliques, en particulier dans le secteur naval, est obtenue en appliquant sur celles-ci des panneaux préfabriqués en laine de roche dont la densité diffère en fonction de l'emploi auquel ils sont destinés.

L'inconvénient principal de cette technique connue est la rigidité de la procédure de montage, sa forte épaisseur et le poids considérable qui, en particulier dans le secteur naval, doivent être réduits le plus possible.

Un deuxième inconvénient de la technique connue est que les panneaux sont ancrés mécaniquement aux structures à protéger au moyen de piques métalliques ou de crampons, disposés avec un espace moyen de 25 ou 30 cm. entre l'un et l'autre; ces derniers constituent des ponts thermiques et sonores qui affaiblissent l'isolation souhaitée. En outre, l'opération de soudage des crampons aux structures métalliques compromet la continuité de leur traitement superficiel anticorrosion qui recouvre complètement toutes leurs surfaces avant leur mise en oeuvre. Ledit traitement doit donc être reconstitué dans chacune de ses phases en correspondance des soudages des crampons, ce qui provoque des charges en termes économiques et de temps.

Un troisième inconvénient de la technique connue est la discontinuité qui se produit inévitablement en correspondance du périmètre de deux panneaux adjacents et qui représente une ultérieure source de dispersion thermique et sonore.

Un quatrième inconvénient des panneaux isolants connus est représenté par le fait que les panneaux se déforment avec le temps, surtout à bord où ils sont assujettis aux vibrations, raison pour laquelle, à partir d'une situation d'adhérence panneau-structure, à cause du gauchissement des panneaux, des détachements dans lesquels se forme du condensat se produisent, en particulier dans les navires qui subissent de grandes variations de température externe, voyageant des mers du nord à l'équateur. Ledit condensat, outre à diminuer la capacité d'isolation, génère une corrosion dans les structures métalliques à l'arrière des panneaux.

Un cinquième inconvénient des panneaux connus est le fait que, étant donné que l'isolation fournie par les panneaux devrait influencer, par exemple, le choix de la puissance des compresseurs de l'installation de conditionnement, à cause de ce qui a été dit ci-dessus, pour des raisons de prudence, la capacité d'isolation des panneaux n'est pratiquement pas prise en considération dans le calcul desdits compresseurs.

Un autre inconvénient des panneaux connus consiste dans le fait qu'ils ne peuvent pas être exactement adaptés aux nécessités individuelles, vu que l'épaisseur des panneaux et leur densité sont standardisés, raison pour laquelle, dans un grand nombre de cas, il faut utiliser des panneaux ayant des épaisseurs et des densités supérieures au strict nécessaire.

Des inconvénients ultérieurs sont provoqués par un gaspillage en termes de main-d'oeuvre pour l'installation des panneaux, par des empêchements et obstacles à bord pendant l'application, par des déchets onéreux et par des difficultés de modifications, aussi bien pendant les travaux que par la suite, dues par exemple à des variations du projet.

Le but de la présente invention est de réaliser une technique basée sur un produit en mesure d'adhérer fortement aux structures métalliques à isoler, qui puisse s'adapter aux exigences les plus diverses, qui présente une surface de finition uniforme sans solution de continuité, dont l'application soit aisée et économique, qui donne des résultats fiables, dont l'encombrement soit limité, qui soit léger et facilement adaptable à toute éventualité et pouvant être reconstitué par la suite, en tout moment.

Dans ce but, la technique selon la présente invention a été réalisée; elle comprend la composition particulière d'un nouveau produit fibreux de nature inorganique à projeter en le pulvérisant sur la surface des structures métalliques à isoler, les innovations apportées à une machine carde-défibreuse pour sa production, la composition d'autres produits de prétraitement ou complémentaires de couverture et le procédé d'application desdits produits.

Pour atteindre le but préétabli et éliminer tous les inconvénients mentionnés des panneaux connus, avec la présente invention, on obtient l'isolation requise des structures métalliques simplement en pulvérisant le produit décrit sur les structures métalliques à isoler.

Le produit employé est à base de scories de haut fourneau, avec fibres en flocons qui, selon la présente invention, sont ouvertes, cardées, défibrées et émiettées dans une machine spéciale et, pour terminer, elles sont mélangées à la sortie avec de l'eau atomisée mélangée à un adhésif; le produit ainsi imprégné est projeté par un appareil de pulvérisation sur les structures métalliques à revêtir, après avoir traité ces dernières avec un adhésif dilué dans de l'eau en utilisant la même machine.

Le produit obtenu s'adapte parfaitement aux surfaces à revêtir et, grâce à l'adhésif qu'il contient, il reste ancré à celles-ci.

Des systèmes analogues sont utilisés dans le bâtiment avec des produits contenant des liants synthétiques ou des additifs de nature organique, par exemple résines en solution ou dispersions vinyliques, à appliquer sur le béton ou matériaux similaires. Cependant ces produits ne peuvent pas être employés dans le domaine naval, où tous les matériaux doivent être incombustibles lorsque leur épaisseur est supérieure à 2 mm. En outre, à bord, les structures à isoler sont métalliques et l'ancrage des produits appliqués doit être beaucoup plus fiable que sur la terre ferme, étant donné que les structures sont assujetties à des vibrations et à de grandes sautes de température.

Le document US 5 401 538 décrit une composition pulvérisable à base de ciment de Portland pour la protection contre le feu de structures métalliques.

Selon la présente invention: des modifications ont été apportées à la machine pour préparer le produit, qui sera définie par la suite comme machine carde-défibreuse; les composants du produit employé, qui est constitué par des substances totalement inorganiques, sont différents; le procédé d'application est différent.

Quelques-uns des nombreux avantages obtenus avec la présente invention sont les suivants: on élimine les panneaux avec tous les inconvénients indiqués ci-dessus relatifs aux crampons, à la discontinuité, aux déformations et aux détachements; on peut exactement prévoir et appliquer le produit le plus opportun dans l'épaisseur la plus appropriée en fonction de toutes les différentes exigences; travail supplémentaire n'est nécessaire pour les retouches ou les finitions, excepté le travail que l'on peut effectuer avec la machine carde-défibreuse; on peut effectuer avec le maximum de facilité des interventions après la mise en oeuvre d'origine, manuellement ou avec la machine carde-défibreuse, en fonction de l'importance.

Un autre avantage que l'on obtient en utilisant la technique selon la présente invention est une plus grande légèreté du produit qui, avec les mêmes prestations isolantes que celles des panneaux utilisés selon la technique connue, a un poids plus faible.

Selon la présente invention, le produit principal employé est essentiellement constitué par un matériau fibreux inorganique très émietté, à base de ciment, laine minérale, argile expansée, silicates contenant du fer et du magnésium et par un faible pourcentage d'additifs minéraux naturels qui présentent des caractéristiques agglutinantes.

En fonction des nécessités, on utilisera une variété de produit fibreux définie "coupe-feu" ou une variété définie "isolant thermique-acoustique".

Selon une réalisation préférée de la présente invention, le produit "coupe-feu" est constitué par les composants suivants, dont les pourcentages indiqués se réfèrent au poids:
ciment 18%; laine minérale 60%; argile expansée 10%; silicates d'aluminium ou de métaux alcalins avec fer et magnésium 10%; additifs divers de minéraux naturels agglutinants, comme bentonites et wollastonites, 2%. Ledit produit a une densité d'environ 190 Kg/m³.

Le produit "isolant thermique-acoustique" est essentiellement constitué par les mêmes composants, mais en proportions différentes, dont les pourcentages indiqués se réfèrent au poids:
ciment 15%; laine minérale 70%; argile expansée 7%; silicates d'aluminium ou de métaux alcalins avec fer et magnésium 7%; additifs divers de minéraux naturels agglutinants, comme bentonites et wollastonites, 1%.

Celui-ci est plus léger du précédent, avec une densité d'environ 120 Kg/m³.

Dans le but de maintenir au plus haut niveau possible, sur les différents points de la surface, la constance des caractéristiques du produit pulvérisé, le produit doit être composé par des fibres de dimensions très réduites, également pour avoir une surface de finition lisse et uniforme.

Dans ce but, des modifications ont été apportées aux machines connues, afin d'obtenir au maximum le défibrage et le cardage du produit utilisé, c'est-à-dire le défilage et l'émiettement, afin de lui faire acquérir les caractéristiques optimales pour être mélangé et absorber le liquide dans le compartiment de malaxage. Selon l'invention, deux groupes de travail sont prévus. Un premier groupe ayant deux arbres parallèles, inclinés vers le haut, qui supportent respectivement un dévidoir et un alimentateur à vis, et un deuxième groupe, ayant les axes perpendiculaires au premier, désignés comme groupe d'ouverture et carde, dans lequel les roues sont équipées de couronnes dentées, façonnées spéciales qui permettent d'obtenir l'effet voulu de défibrage, cardage et émiettement maximum du produit.

Dans la machine carde-défibreuse selon l'invention, on introduit le matériau fibreux dans la partie supérieure de la machine au moyen d'une trémie d'alimentation. Ledit matériau descend par gravité et tombe sur le dévidoir et l'alimentateur à vis.

Le dévidoir, situé en haut, selon l'invention est équipé de pointes en acier qui commencent à émietter le matériau.

L'alimentateur à vis qui se trouve au-dessous pousse le matériau en avant, vers le haut, jusqu'à le faire tomber à l'intérieur de la machine dans le groupe d'ouverture et de carde qui défait les fibres, émiettant le matériau en petites parties homogènes, grâce aux couronnes dentées prévues à cet effet.

Ensuite, le matériau est transporté vers la sortie, dans un premier temps il est aspiré, puis il est soufflé, grâce à un jet d'air comprimé généré par une soufflante.

Le produit obtenu, constitué par des flocons cardés et défibrés, est convoyé par courant d'air dans un tuyau flexible de refoulement à l'extrémité duquel se trouve l'appareil de pulvérisation.

La machine carde-défibreuse selon l'invention est équipée de réservoirs et d'une pompe indépendante qui aspire et pompe le liquide à fournir à l'appareil de pulvérisation au moyen d'un conduit particulier indépendant.

Dans un premier temps, le liquide sera constitué par un adhésif dilué avec de l'eau qui est directement pulvérisé pour préparer la surface à revêtir; dans un deuxième temps, l'adhésif dilué avec de l'eau arrive à l'appareil de pulvérisation avec le produit fibreux, de façon telle qu'à la sortie, l'adhésif dilué se mélange avec le produit fibreux cardé, défibré et émietté, qui s'imprègne et est préparé pour être pulvérisé sur la surface à revêtir. Pour terminer, dans le conduit du liquide, l'adhésif dilué peut être remplacé par un produit complémentaire de couverture adéquat, liquide lui aussi, qui est pulvérisé sur les surfaces traitées, toujours en utilisant la même machine carde-défibreuse, dans ce cas, après avoir arrêté le refoulement du produit fibreux.

Par rapport à la technique connue, la sortie de l'appareil de pulvérisation a en outre été modifiée afin d'éviter l'inconvénient des fréquents engorgements qui se produisaient avec les gicleurs périmétraux connus. Selon l'invention, l'appareil de pulvérisation est constitué par une extrémité à bride, au centre de laquelle se trouve un seul gicleur d'où sort un jet de liquide atomisé, constitué par de l'eau mélangée à de la colle provenant de la pompe indépendante, alors qu'à travers la bride passent les flocons cardés, défibrés et émiettés du produit, qui arrivent à une vitesse relativement faible et sont imprégnés de liquide, puis projetés contre les structures à isoler, adhérant parfaitement à celles-ci, grâce à la colle contenue dans le liquide et à l'adhésif préalablement appliqué.

Les refoulements du produit, de l'eau et de la colle sont commandés par des soupapes situées à proximité de l'appareil de pulvérisation et ils peuvent donc être réglés par l'opérateur même à une certaine distance de la machine.

Le procédé d'application du produit fibreux selon la présente invention est le suivant.

Sur les surfaces à isoler, on applique préalablement, à la main ou à l'aide de la même machine carde-défibreuse, une fine couche de matériau ancrant ou adhésif ayant une épaisseur de 0,01 mm. environ. Ledit adhésif, qui a la fonction de faciliter l'adhésion successive du matériau fibreux, comprend un seul composant à base de polymères acryliques purs en dispersion aqueuse, de préférence constitué par les composants suivants, dont les pourcentages indiqués se réfèrent au poids: 80% de dispersion de polymères acryliques purs, 2% d'additifs divers et 18% d'eau.

On actionne ensuite la commande du refoulement du matériau fibreux. Ce matériau est cardé, défibré, effilé et émietté à l'intérieur de la machine et il est ensuite imprégné de liquide en correspondance de la sortie.

L'un des nombreux avantages du matériau employé selon la présente invention est le fait que les fibres absorbent le liquide, mais elles en expulsent ensuite la quantité en excès, faisant couler l'eau qui, ensuite évapore et sèche. Un contrôle systématique au moyen d'épaisseurmètres garantit que l'épaisseur de produit prévue en fonction des nécessités a été déposée sur les surfaces à protéger.

Le produit "coupe-feu" est appliqué avec des épaisseurs qui dépendent de la résistance au feu requise et du type de surface, qui peuvent aller de 20 mm. sur les renforts, à 40 mm. sur les surfaces lisses.

Ou bien, en alternative, on pulvérise l'isolant thermique-acoustique. Ce dernier est lui aussi pulvérisé jusqu'à obtenir une épaisseur déterminée en fonction des exigences et qui peut varier, par exemple, entre 15 mm. pour une isolation uniquement thermique à 40 mm. pour une isolation acoustique.

En utilisant toujours la même machine carde-défibreuse, pour les surfaces à vue on peut pulvériser un produit complémentaire de finition qui est un matériau transparent et durcissant de la couche fibreuse superficielle. Ce dernier est constitué par un imprégnant, à base de silicates alcalins et polymères acryliques modifiés en solution aqueuse, ayant une action pénétrante optimale; il est constitué de préférence par les composants suivants, dont les pourcentages indiqués se réfèrent au poids: 2% de dispersion de polymères acryliques modifiés, 70% de silicates alcalins, 1% d'additifs divers, 27% d'eau.

En cas d'exigences particulières, on peut par contre recouvrir la surface du produit fibreux en pulvérisant un produit complémentaire de protection à base de dispersion de polymères vinyliques et de. charges minérales inorganiques en solution aqueuse; il est constitué de préférence par les composants suivants, dont les pourcentages indiqués se réfèrent au poids: 18% de dispersion de polymères vinyliques, 15% de bioxyde de titane, 50% de charges minérales inorganiques, 2% d'additifs divers, 15% d'eau.

Ce produit de finition protectrice peut être employé même dans le secteur naval, bien qu'il contienne des polymères vinyliques, étant donné qu'il est appliqué en une couche fine, inférieure à l'épaisseur de 2 mm. prescrite.

Dans le but d'imperméabiliser la surface du produit fibreux, on peut compléter l'opération en pulvérisant un produit complémentaire constitué par un produit constitué par un seul composant, à base de charges et pigments inorganiques, dans un véhicule composé par des résines acryliques et plastifiantes ainsi que de l'eau; de préférence, il est constitué par les composants suivants, dont les pourcentages indiqués se réfèrent au poids: 50% de dispersion de charges et pigments inorganiques, principalement oxydes, 20% de résines acryliques et plastifiantes, 30% d'eau. Ce produit imperméabilisant a des caractéristiques ignifuges considérables, une élasticité et une flexibilité très élevées.

La technique pour l'isolation décrite ci-dessus, avec les produits indiqués, a fait constater, lors d'essais en laboratoire, une excellente résistance aux vibrations, au vieillissement, et à l'environnement salin.

Les fibres du matériau utilisé pour la technique selon la présente invention ont des dimensions supérieures à 5 µ de diamètre et un coefficient entre la longueur et le diamètre qui respecte les prescriptions de sécurité des normes européennes.

Tous les avantages susdits et d'autres encore, apparaîtront évidents dans la description des figures, jointes uniquement à titre d'illustration et non pas limitatif dans lesquelles:
la fig. 1 illustre une section verticale de la machine carde- défibreuse selon l'invention;
la fig. 2 représente une vue en section horizontale de la machine carde-défibreuse de figure 1, effectuée selon le plan II-II;
la fig. 3 représente une vue avant de l'appareil de pulvérisation;
la fig. 4 est un schéma fonctionnel de la machine dans son ensemble;
la fig. 5 est une couronne dentée à installer sur les roues du groupe d'ouverture et carde;
la fig. 6 illustre une section transversale de la couronne dentée de figure 5. Dans les différentes figures, les éléments analogues ont été indiqués avec les mêmes symboles numériques.

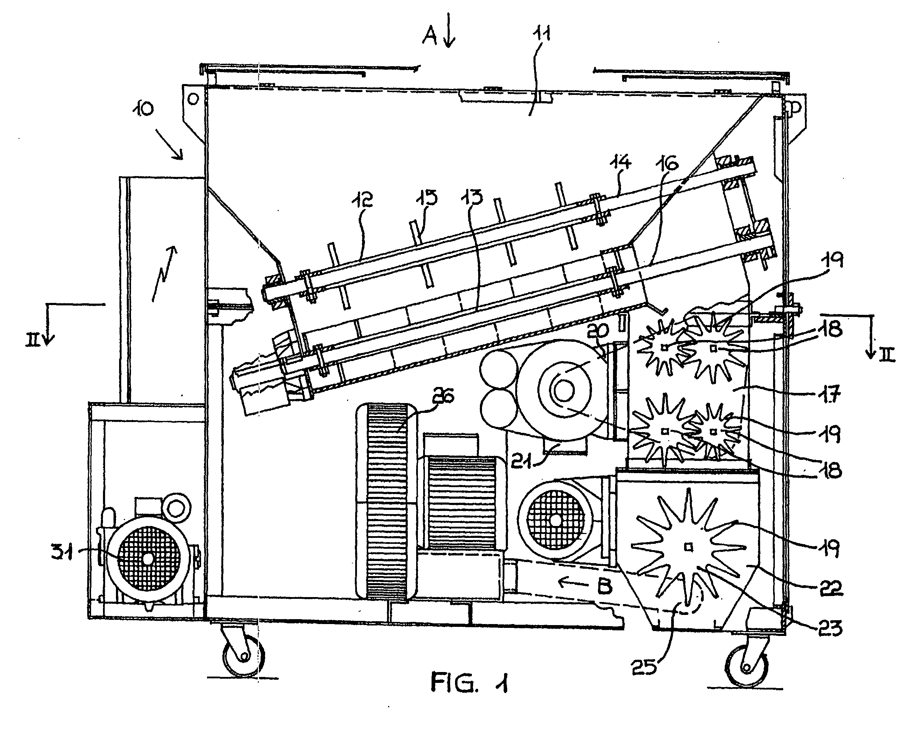

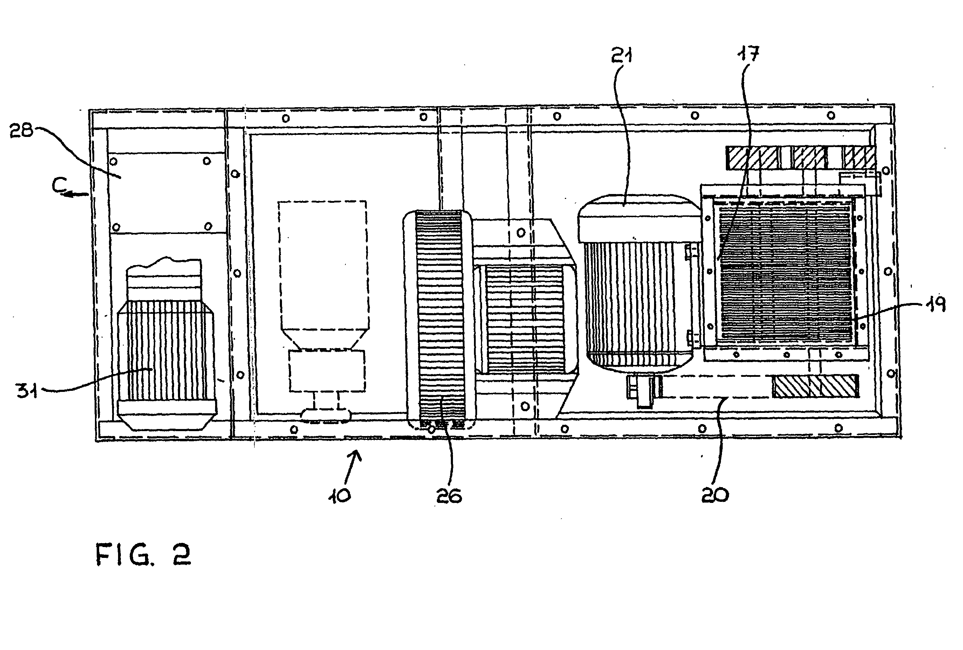

Les figures 1 et 2 illustrent les parties essentielles de la machine carde-défibreuse selon la présente invention, indiquée avec 10, respectivement selon une section verticale et une horizontale. Depuis le haut, en direction de la flèche A, on introduit le matériau fibreux dans la partie supérieure 11 de la machine carde-défibreuse 10, au moyen d'une trémie d'alimentation (non illustrée). Ledit matériau descend par gravité et tombe sur le dévidoir 12 et sur l'alimentateur à vis 13.

Le dévidoir 12 est situé au-dessus, sur un arbre 14, incliné vers le haut.

Le dévidoir 12 est équipé sur son périmètre de pointes en acier radiales 15 qui commencent à émietter le matériau.

L'alimentateur à vis 13, sur un arbre 16 parallèle à l'arbre 14, se trouve au-dessous du dévidoir 12 et pousse le matériau fibreux en avant, vers le haut, jusqu'à le faire tomber dans une chambre 17 à l'intérieur de la machine.

Dans la chambre 17, se trouvent des roues 18 qui constituent le groupe d'ouverture et carde qui défait les fibres, émiettant le matériau en petites parties homogènes, grâce à des couronnes dentées 19, prévues à cet effet, qui sont emboîtées sur l'axe desdites roues 18.

La rotation des roues 18 est commandée par des courroies 20 actionnées par un moteur 21.

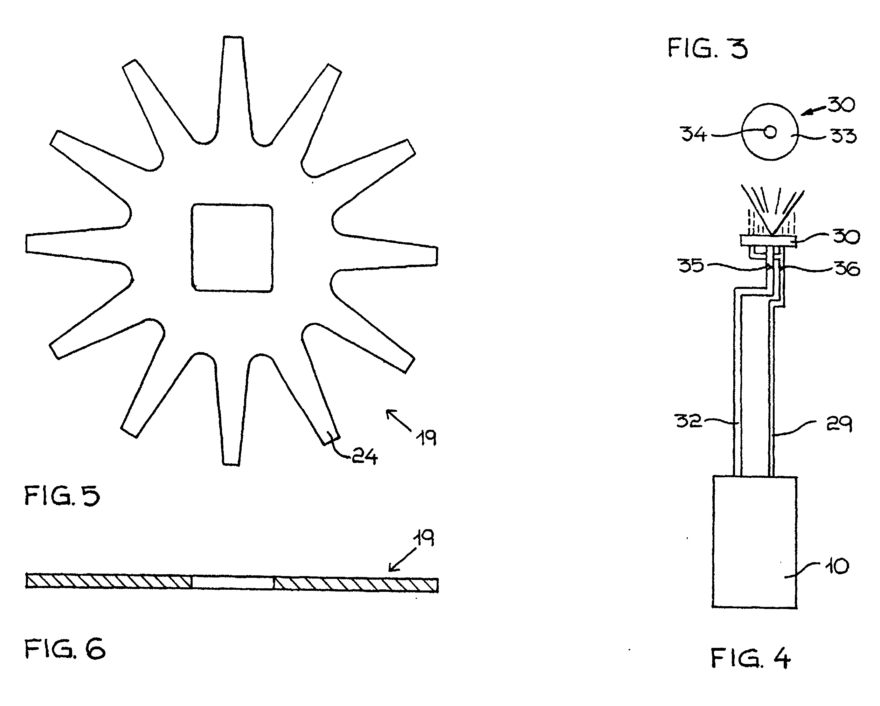

Les couronnes dentées 19 sont illustrées spécifiquement en vue frontale dans la figure 5 et en section dans la figure 6. Elles sont caractérisées par de longues dents 24 en forme de doigts et qui, avec la rotation des couronnes 19 l'une contre l'autre, émiettent, cardent et défibrent le matériau.

Le matériau émietté et cardé est ensuite introduit dans une chambre inférieure 22 de poussée, dans laquelle est située une roue 23, sur laquelle sont également emboîtées des couronnes dentées façonnées 19. La roue 23 canalise le matériau émietté en direction d'un tuyau interne 25, légèrement incliné vers le haut, dans la direction de la flèche B, de sortie du matériau. Le mouvement d'avancement du matériau fibreux à l'intérieur du tuyau interne 25 est également et surtout activé par un jet d'air comprimé engendré par une soufflante 26 qui aspire les fibres et les pousse en les soufflant dans le tuyau de refoulement 28 pour les faire sortir de la machine carde-défibreuse en direction de la flèche C.

Ledit tuyau 28 de refoulement est connecté à l'extérieur à un tuyau flexible 29, ayant de préférence un diamètre de 50 mm.; il peut même atteindre une longueur de 25 m. À l'extrémité dudit tuyau flexible externe 29 se trouve l'appareil de pulvérisation 30, comme schématisé dans la figure 4.

La machine carde-défibreuse 10 est équipée de réservoirs (non illustrés) et d'une pompe indépendante 31 qui aspire et pompe le liquide. Un conduit particulier indépendant 32 transporte le liquide à l'appareil de pulvérisation 30.

Le liquide peut être constitué par un adhésif dilué avec de l'eau ou par un produit complémentaire de couverture.

Pendant la phase de pulvérisation du matériau fibreux, l'adhésif dilué avec de l'eau arrive à l'appareil de pulvérisation au moyen du conduit 32 avec le produit fibreux qui arrive à l'appareil de pulvérisation au moyen du tuyau flexible 29.

Dans le but d'atteindre à la sortie la meilleure imprégnation possible du produit fibreux défibré et émietté avec l'adhésif dilué dans de l'eau, la sortie de l'appareil de pulvérisation 30 a été réalisée avec une extrémité à bride 33, au centre de laquelle est situé un seul gicleur 34. Du gicleur central 34 sort en éventail un jet de liquide atomisé, constitué par de l'eau mélangée à de la colle, provenant du conduit 32. En même temps, à travers la bride périphérique 33, le produit fibreux cardé, défibré et émietté, est expulsé; celui-ci arrive à une vitesse relativement faible et sort pratiquement avec un flux parallèle, comme illustré dans la figure 4; pour cette raison, il est totalement imprégné par le liquide, puis projeté sur la structure à isoler en adhérant parfaitement à celle-ci, grâce à la colle contenue dans le liquide et à l'adhésif préalablement appliqué.

Les refoulements du produit fibreux et du liquide sont commandés par des soupapes 35, 36, situées respectivement sur le conduit 32 et sur le tuyau 29, à proximité de l'appareil de pulvérisation 30 et ils peuvent donc être réglés par l'opérateur pendant le travail, même à une certaine distance de la machine.

## Revendications

1. Technique pour l'isolation et la protection de structures métalliques contre le feu, **caractérisée par le fait qu'**elle est réalisée en projetant un produit fibreux de nature inorganique, à base de scories de haut fourneau sur les structures métalliques à isoler, ledit produit ayant des fibres en flocons qui sont ouvertes, cardées, défibrées et émiettées dans une machine carde-défibreuse spéciale (10) et en imprégnant le produit à la sortie, à l'aide d'un appareil de pulvérisation (30) avec un liquide atomisé constitué par un adhésif dilué dans de l'eau.

2. Technique selon la revendication 1 **caractérisée par le fait que** dans la machine carde-défibreuse (10) sont prévus deux groupes de travail du matériau fibreux introduit dans la partie supérieure (11) de la machine (10), dont le premier groupe est constitué par deux arbres parallèles (14, 16) inclinés vers le haut qui supportent respectivement un dévidoir (12), situé au-dessus et un alimentateur à vis (13), ainsi qu'un deuxième groupe, ayant les axes perpendiculaires au premier, désigné comme groupe d'ouverture et carde, est constitué par des roues (18) placées dans une chambre (17), et que lesdites roues (18) ont, emboîtées sur leur axe, des couronnes dentées façonnées spéciales (19) ayant de longues dents (24) en forme de doigts.

3. Technique selon la revendication 1, **caractérisée par le fait que** le matériau à la sortie de la chambre (17) est introduit dans une chambre inférieure (22) de poussée dans laquelle une roue (23), sur laquelle sont emboîtées des couronnes dentées façonnées (19), le dirige vers un tuyau interne (25), également grâce à un jet d'air comprimé engendré par une soufflante (26), matériau qui est ensuite dirigé, par courant d'air, dans un tuyau de refoulement (28) qui est connecté extérieurement à un tuyau flexible (29) à l'extrémité duquel se trouve l'appareil de pulvérisation (30), alors qu'une pompe indépendante (31) aspire d'un réservoir un liquide constitué par un adhésif dilué avec de l'eau et le pompe dans un conduit particulier indépendant (32) qui le transporte en même temps vers l'appareil de pulvérisation (30), imprégnant le matériau fibreux.

4. Technique selon la revendication 1, **caractérisée par le fait que** le produit utilisé est constitué par un matériau fibreux inorganique à base de ciment, laine minérale, argile expansée, silicates contenant du fer et du magnésium, et par un faible pourcentage d'additifs minéraux naturels avec caractéristiques agglutinantes.

5. Techniques selon les revendications 1 et 2, **caractérisée par le fait que** le dévidoir (12) est équipé de pointes en acier (15).

6. Technique selon les revendications 1 et 4, **caractérisée par le fait que** le produit utilisé est constitué par les composants suivants, dont les pourcentages indiqués se réfèrent au poids: ciment 18%; laine minérale 60%, argile expansée 10%; silicates d'aluminium ou de métaux alcalins avec fer et magnésium 10%; additifs divers de minéraux naturels agglutinants, comme bentonites ou wollastonites, 2%, et que ledit produit a une densité de 190 Kg/m³ et qu'il est appliqué avec des épaisseurs allant de 20 mm. sur les renforts à 40 mm. sur les surfaces lisses.

7. Technique selon les revendications 1 et 4, **caractérisée par le fait que** le produit utilisé est constitué par les composants suivants, dont les pourcentages indiqués se réfèrent au poids: ciment 15%; laine minérale 70%, argile expansée 7%; silicates d'aluminium ou de métaux alcalins avec fer et magnésium 7%; additifs divers de minéraux naturels agglutinants, comme bentonites ou wollastonites, 1%, et que ledit produit a une densité de 120 Kg/m³ et qu'il est appliqué avec des épaisseurs allant de 15 mm. à 40 mm.

8. Technique selon la revendication 1, **caractérisée par le fait que**, au moyen de la machine carde-défibreuse (10), les surfaces à revêtir sont prétraitées avec un liquide constitué par un adhésif dilué dans de l'eau, en maintenant préalablement arrêté le refoulement du produit fibreux.

9. Technique selon les revendications 1 et 3, **caractérisée par le fait que** dans le conduit (32) du liquide, l'adhésif dilué dans l'eau peut être remplacé par un produit complémentaire de couverture, lui aussi liquide, qui est pulvérisé sur les surfaces traitées toujours en utilisant la même machine (10), dans ce cas après avoir arrêté le refoulement du produit fibreux.

10. Technique selon la revendication 1, **caractérisée par le fait que** l'appareil de pulvérisation (30) est constitué par une extrémité à bride (33), au centre de laquelle se trouve un seul gicleur (34) d'où sort en éventail un jet de liquide atomisé.

11. Technique selon la revendication 1, **caractérisée par le fait que** les refoulements du produit et du liquide sont commandés par des soupapes (36, 35) situées à proximité de l'appareil de pulvérisation (30).

12. Technique selon la revendication 1, **caractérisée par le fait que** l'adhésif est constitué par un seul composant à base de polymères acryliques purs en dispersion aqueuse, constitué par les composants suivants, dont les pourcentages indiqués se réfèrent au poids: 80% de dispersion de polymères acryliques purs, 2% d'additifs divers, 18% d'eau.

13. Technique selon la revendication 1, **caractérisée par le fait que**, avec la même machine carde-défibreuse (10), on peut pulvériser un produit complémentaire de finition, constitué par un imprégnant, à base de silicates alcalins et polymères acryliques modifiés en solution aqueuse, ayant une action pénétrante optimale et qu'il est plus spécifiquement constitué par les composants suivants, dont les pourcentages indiqués se réfèrent au poids: 2% de dispersion de polymères acryliques modifiés, 70% de silicates alcalins, 1% d'additifs divers, 27% d'eau.

14. Technique selon la revendication 1, **caractérisée par le fait que**, avec la même machine carde-défibreuse (10), on peut pulvériser un produit complémentaire de protection à base de dispersion de polymères vinyliques et de charges minérales inorganiques en solution aqueuse et que, de façon plus spécifique, il est constitué par les composants suivants, dont les pourcentages indiqués se réfèrent au poids: 18% de dispersion de polymères vinyliques, 15% de bioxyde de titane, 50% de charges minérales inorganiques, 2% d'additifs divers, 15% d'eau.

15. Technique selon la revendication 1, **caractérisée par le fait que**, avec la même machine carde-défibreuse (10), on peut pulvériser un produit complémentaire imperméabilisant constitué par un seul composant, à base de charges et de pigments inorganiques, dans un véhicule composé par des résines acryliques et plastifiantes et de l'eau et que, de façon plus spécifique, il est constitué par les composants suivants, dont les pourcentages indiqués se réfèrent au poids: 50% de dispersion de charges et de pigments inorganiques, principalement oxydes, 20% de résines acryliques et plastifiantes, 30% d'eau.

16. Technique selon la revendication 1, **caractérisée par le fait que** le procédé d'application du produit fibreux est le suivant: sur les surfaces à isoler on applique préalablement, à la main ou à l'aide de la même machine carde-défibreuse (10), une couche de matériau ancrant ou adhésif mélangé à de l'eau, avec une épaisseur de 0,01 mm., que l'on actionne ensuite la commande du refoulement du matériau fibreux, qui est cardé, défibré, effilé et émietté à l'intérieur de la machine (10), puis imprégné de liquide en correspondance de l'appareil de pulvérisation (30), que l'on ferme éventuellement le refoulement du matériau fibreux et que l'on pulvérise avec la même machine (10) un produit complémentaire.

## Claims

1. Technique for insulation and fireproofing of metal structures, **characterized by** the fact that it is obtained by projecting a fibrous inorganic product, made of furnace slag, on the metal structures to be insulated, and having said product staple fibers that are opened, carded, broken, and ground by a specially designed carder-grinder (10), and by soaking the output product by means of an atomizer (30), with an atomized fluid consisting of water-diluted glue.

2. Technique according to claim 1, **characterized by** the fact that the carder-grinder (10) features two processing units of the fibrous material which is fed from the carder-grinder (10) top (11); the first of these processing units consists of two parallel shafts (14, 16), with an upward slant, which, respectively, bear a reel (12), placed above, and a scroll (13); the second unit with shafts perpendicular to the first unit, is designed to open and card the material; it features two wheels (18) placed in a chamber (17); said wheels (18) carry specially shaped ring gears (19) coupled to the wheel axis, with long, finger-shaped teeth (24).

3. Technique according to claim 1, **characterized by** the fact that the material when coming out of the chamber (17) is fed into a lower thrust chamber (22), where a wheel (23), on which shaped ring gears (19) are coupled, carries the material to an inner pipe (25), also with the help of a compressed air jet generated by a blower (26), which material is then carried by the air draft into a feed pipe (28), which on the outside is linked to a flexible hose (29) at the end of which the atomizer (30) is placed, whereas an independent pump (31) sucks a fluid from a tank, which fluid consists of glue diluted with water, and pumps it into a special independent manifold (32) which concurrently carries it to the atomizer (30), thus soaking the fibrous material.

4. Technique according to claim 1, **characterized by** the fact that the product employed consists of cement based inorganic fibrous material, mineral wool, expanded clay, silicate containing iron and magnesium, and a small percentage of natural mineral additives with agglutinating properties.

5. Technique according to claims 1 and 2, **characterized by** the fact that the reel (12) is fitted with steel spikes (15).

6. Technique according to claims 1 and 4, **characterized by** the fact that the product employed consists of the following components, whose weight percentage is indicated below: cement 18%; mineral wool 60%; expanded clay 10%; aluminum silicates or alkaline metal silicates with iron and magnesium 10%; sundry natural mineral additives having agglutinating properties, such as bentonites or wollastonites, 2%, and that said product has a density of 190 Kg/m³ and it is applied with a thickness of 20 to 40 mm on bracings and smooth surfaces, respectively.

7. Technique according to claims 1 and 4, **characterized by** the fact that the product employed consists of the following components, whose weight percentage is indicated below: cement 15%; mineral wool 70%; expanded clay 7%; aluminum silicates or alkaline metal silicates with iron and magnesium 7%; sundry natural mineral additives having agglutinating properties, such as bentonites or wollastonites, 1%, and that said product has a density of 120 Kg/m³ and it is applied with a thickness of 15 to 40 mm.

8. Technique according to claim 1, **characterized by** the fact that by means of the carder-grinder (10) surfaces to be coated are pre-treated with a fluid consisting of water-diluted glue, after having turned off the output of fibrous material.

9. Technique according to claims 1 and 3, **characterized by** the fact that in the fluid manifold (32) the water-diluted glue can be replaced with a complementary coating product, also in fluid form, which is sprayed on the treated surfaces by using the same carder-grinder (10), in this case after having turned off the output of fibrous material.

10. Technique according to claim 1, **characterized by** the fact that the atomizer (30) consists of a flanged end piece (33), with at its center one single nozzle (34) from which a fan-shaped jet of atomized fluid is sprayed out.

11. Technique according to claim 1, **characterized by** the fact that product and fluid output is controlled by valves (36, 35) placed near the atomizer (30).

12. Technique according to claim 1, **characterized by** the fact that the glue is a single component formulation based on pure acrylic polymers in aqueous dispersion and consists of the following components, here indicated in weight percentage: 80% pure acrylic polymer dispersion, 2% sundry additives, 18% water.

13. Technique according to claim 1, **characterized by** the fact that with the same carder-grinder (10) a complementary finishing product can be sprayed, consisting of a soaking substance, based on alkaline silicates and acrylic polymers modified in aqueous solution, which has an excellent penetrating action; and that, more specifically, it features the following components, here indicated in weight percentage: 2% dispersion of modified acrylic polymers, 70% alkaline silicates, 1% sundry additives, 27% water.

14. Technique according to claim 1, **characterized by** the fact that with the same carder-grinder (10) a complementary protective product can be sprayed based on a vinyl polymer dispersion and inorganic mineral charges in aqueous solution, and that, more specifically, it features the following components, here indicated in weight percentage: 18% dispersion of vinyl polymers, 15% titanium dioxide, 50% inorganic mineral charges, 2% sundry additives, 15% water.

15. Technique according to claim 1, **characterized by** the fact that with the same carder-grinder (10) a complementary waterproofing single-component product can be sprayed based on inorganic charges and pigments in a carrier consisting of acrylic and plasticizing resins and water and that, more specifically, it consists of the following components, here indicated in weight percentage: 50% dispersion of inorganic charges and pigments, mainly oxides, 20% acrylic and plasticizing resins, 30% water.

16. Technique according to claim 1, **characterized by** the fact that the procedure to apply the fibrous product is the following: on the surfaces to be insulated, a layer of an anchoring material or of glue mixed with water is applied by hand, or with the same carder-grinder (10), with a thickness of 0.01 mm; the fibrous material output switch is turned on and the fibrous material is carded, broken, unravelled, and ground inside the carder-grinder (10), it is then soaked with fluid near the atomizer (30); possibly, the fibrous material output nozzle is turned off, and a complementary product is atomized with the same carder-grinder (10).

## Patentansprüche

1. Technik für die Isolierung und den Feuerschutz von Metallstrukturen, durch die Tatsache **gekennzeichnet**, daß diese Technik darin besteht, ein anorganisches Faserprodukt aus Hochofenschlacken auf die zu isolierenden Metallstrukturen zu spritzen, daß dieses Produkt Fasern in Flocken besitzt, die in einer speziellen Krempel - Entfaserungsmaschine (10) geöffnet, gekrempelt, entfasert und zerkleinert werden, und daß das Produkt bei der Abgabe durch einen Sprühapparat (30) mit einer aus mit Wasser verdünntem Klebestoff bestehenden Sprühflüssigkeit getränkt wird.

2. Technik nach dem Patentanspruch 1, durch die Tatsache **gekennzeichnet**, daß in der Krempel - Entfaserungsmaschine (10) zwei Arbeitsgruppen der Verarbeitung des in dem oberen Teil (11) der Maschine (10) eingeführten Fasermaterials vorgesehen sind, die erste Arbeitsgruppe besteht aus zwei nach oben geneigten parallelen Wellen (14, 16), die jeweils eine oben gelegene Haspel (12) und eine Förderschnecke (13) tragen und eine zweite Gruppe, deren Achsen senkrecht zur ersten Gruppe stehen und die als Öffnungs- und Krempelgruppe bestimmt ist und aus Rädern (18) besteht, die in einer Kammer (17) angeordnet sind und daß diese Räder (18) auf ihrer Achse verkeilt besondere gezahnte profilierte Kronen (19) tragen, die lange fingerförmige Zähne (24) besitzen.

3. Technik nach dem Patentanspruch 1, durch die Tatsache **gekennzeichnet**, daß das aus der Kammer (17) herausgehende Material in eine untere Antriebskammer (22) eingeführt wird, in der ein Rad (23), auf dem gezahnte profilierte Kronen (19) eingekeilt sind, das Material in ein inneres Rohr (25) einführt, dies geschieht auch mit Hilfe eines Druckluftstrahles, der durch ein Gebläse (26) erzeugt wird, das Material wird dann in einem Luftstrom in ein Förderrohr (28) eingeführt, dieses Rohr ist extern mit einem flexiblen Rohr (29) verbunden, an dessen Ende der Sprühapparat (30) angebracht ist, während eine unabhängige Pumpe (31) aus einem Tank eine Flüssigkeit ansaugt, die aus einem mit Wasser verdünnten Klebemittel besteht und die in die dafür vorgesehene unabhängige Leitung (32) gepumpt wird, die die Flüssigkeit gleichzeitig an den Sprühapparat (30) bringt und damit das Fasermaterial imprägniert.

4. Technik nach dem Patentanspruch 1, durch die Tatsache **gekennzeichnet**, daß das angewandte Produkt aus einem anorganischen Fasermaterial besteht, das durch Zement, Mineralwolle, verschäumter Tonerde, Eisen- und Magnesiumhaltige Silikate und aus einem kleinen Prozentsatz von natürlichen Mineralzusätzen mit Bindevermögen gebildet wird.

5. Technik nach den Patentansprüchen 1 und 2, durch die Tatsache **gekennzeichnet**, daß die Haspel (12) mit Stahlspitzen (15) versehen ist.

6. Technik nach den Patentansprüchen 1 und 4, durch die Tatsache **gekennzeichnet**, daß das angewandte Produkt aus folgenden Bestandteilen besteht, deren angegebene Prozentsätze sich auf das Gewicht beziehen: Zement 18%, Mineralwolle 60%; verschäumte Tonerde 10%; Aluminiumsilikate oder alkalische Metalle mit Eisen und Magnesium 10%; verschiedene natürliche Mineralzusätze mit Bindevermögen wie Bentonit oder Wollastonit 2%, und daß dieses Produkt eine Dichte von 190 kg/mc besitzt und in einer Dicke von 20 mm an den Verstärkungen und von 40 mm an den glatten Oberflächen aufgetragen wird.

7. Technik nach den Patentansprüchen 1 und 4, durch die Tatsache **gekennzeichnet**, daß das angewandte Produkt aus folgenden Bestandteilen besteht, deren angegebene Prozentsätze sich auf das Gewicht beziehen: Zement 15%, Mineralwolle 70%; verschäumte Tonerde 7%; Aluminiumsilikate oder alkalische Metalle mit Eisen und Magnesium 7%; verschiedene natürliche Mineralzusätze mit Bindevermögen wie Bentonit oder Wollastonit 1%, und daß dieses Produkt eine Dichte von 120 kg/mc besitzt und in einer Dicke von 15 mm bis 40 mm aufgetragen wird.

8. Technik nach dem Patentanspruch 1, durch die Tatsache **gekennzeichnet**, daß durch die Krempel - Entfaserungsmaschine (10) die zu verkleidenden Oberflächen durch eine Flüssigkeit vorbehandelt werden, die ein mit Wasser verdünntes Klebemittel enthält, indem man vorher die Abgabe des Faserproduktes geschlossen hält.

9. Technik nach den Patentansprüchen 1 bis 3, durch die Tatsache **gekennzeichnet**, daß in der Flüssigkeitsleitung (32), das mit Wasser verdünnte Klebemittel durch ein komplementäres, ebenfalls flüssiges Deckprodukt ersetzt werden kann, welches durch die Anwendung der gleichen Maschine (10) auf die behandelten Oberflächen gespritzt wird , wobei in diesem Fall die Abgabe des Faserproduktes geschlossen wird.

10. Technik nach dem Patentanspruch 1, durch die Tatsache **gekennzeichnet**, daß der Sprühapparat (30) aus einem Flanschende (33) besteht, in der Mitte befindet sich eine einzige Düse (34), aus der fächerförmig ein Sprühstrahl der Flüssigkeit austritt.

11. Technik nach dem Patentanspruch 1, durch die Tatsache **gekennzeichnet**, daß die Abgabe des Produktes und der Flüssigkeit durch Ventile (36, 35) geregelt wird, die in der Nähe des Sprühapparates (30) liegen.

12. Technik nach dem Patentanspruch 1, durch die Tatsache **gekennzeichnet**, daß das Klebemittel eine Monokomponente auf Grund von reinen Acrylpolymeren in wäßriger Dispersion darstellt, die aus folgenden Bestandteilen besteht, deren angegebene Prozentsätze sich auf das Gewicht beziehen: 80% der Dispersion der reinen Acrylpolymeren, 2% verschiedene Zusätze, 18% Wasser.

13. Technik nach dem Patentanspruch 1, durch die Tatsache **gekennzeichnet**, daß man durch die selbe Krempel - Entfaserungsmaschine (10) ein ergänzendes Produkt zur Vervollständigung sprühen kann, das aus einem Imprägnierungsmittel aus alkalischen Silikaten und in wäßriger Lösung modifizierten Acrylpolymeren besteht und das ein ausgezeichnetes Eindringungsvermögen besitzt und spezifisch aus folgenden Bestandteilen besteht, deren angegebene Prozentsätze sich auf das Gewicht beziehen: 2% der Dispersion der modifizierten Acrylpolymere, 70% der alkalischen Silikate, 1% der verschiedenen Zusätze, 27% Wasser.

14. Technik nach dem Patentanspruch 1, durch die Tatsache **gekennzeichnet**, daß man durch die selbe Krempel - Entfaserungsmaschine (10) ein ergänzendes Schutzprodukt sprühen kann, das aus einer Dispersion von Vinylpolymeren und anorganischen Mineralchargen in wäßriger Lösung besteht, und spezifisch folgende Bestandteilen besitzt, deren angegebene Prozentsätze sich auf das Gewicht beziehen: 18% der Dispersion der Vinylpolymere, 15% Titandioxyd, 50% anorganische Mineralchargen, 2% der verschiedenen Zusätze, 15% Wasser.

15. Technik nach dem Patentanspruch 1, durch die Tatsache **gekennzeichnet**, daß man durch die selbe Krempel - Entfaserungsmaschine (10) ein ergänzendes abdichtendes Produkt als Monokomponente auf der Basis von Chargen und anorganischen Pigmenten sprühen kann, in einem aus Acrylharzen und Plastifikatoren sowie Wasser bestehenden Träger spezifisch aus folgenden Bestandteilen zusammengesetzt, deren angegebene Prozentsätze sich auf das Gewicht beziehen: 50% der Dispersion der Chargen und anorganischen Pigmente, hauptsächlich Oxyde, 20% Acrylharze und Plastifikatoren, 30% Wasser.

16. Technik nach dem Patentanspruch 1, durch die Tatsache **gekennzeichnet**, daß der Vorgang der Applikation des Faserproduktes der folgende ist: auf der zu isolierenden Fläche wird vorher mit der Hand oder mit Hilfe der selben Krempel-Entfaserungsmaschine (10) eine Schicht des Bindemittels oder des mit Wasser gemischten Klebestoffes in einer Dicke von 0,01 mm appliziert, es wird danach der Schalter der Abgabe des Fasermaterials betätigt, das im Inneren der Maschine (10) gekrempelt, entfasert und zerkleinert und schließlich durch den Sprühapparat (30) mit der Flüssigkeit getränkt wird, man kann eventuell die Abgabe des Fasermaterials schließen und mit der selben Maschine (10) ein ergänzendes Produkt sprühen.
